# FASCICULE DE BREVET EUROPEEN

(11) **EP 3 154 678 B1**
(45) Date de publication et mention de la délivrance du brevet: **07.08.2019**
(21) Numéro de dépôt: 15737993.4
(22) Date de dépôt: 09.06.2015
(51) Int. Cl.: B01J 21/04, B01J 35/10, C01F 7/02, C01F 7/14

(54) **ALUMINE MÉSOPOREUSE ET MACROPOREUSE AMORPHE À DISTRIBUTION POREUSE OPTIMISÉE ET SON PROCÉDÉ DE PRÉPARATION**
AMORPHES MESOPORÖSES UND MAKROPORÖSES ALUMINIUMOXID MIT OPTIMIERTER PORENVERTEILUNG UND VERFAHREN ZUR HERSTELLUNG DAVON
AMORPHOUS MESOPOROUS AND MACROPOROUS ALUMINA WITH OPTIMISED PORE DISTRIBUTION AND METHOD FOR PREPARING SAME

(30) Priorité: 13.06.2014 FR 1455411
(43) Date de publication de la demande: 19.04.2017
(73) Titulaire: IFP Energies nouvelles, 92500 Rueil-Malmaison (FR)
(72) Inventeur: BOUALLEG, Malika, F-69100 Villeurbanne (FR); BOUVRY, Céline, F-92500 Rueil-Malmaison (FR)
(74) Mandataire: IFP Energies nouvelles
(86) Numéro de dépôt international: PCT/EP2015/062824
(87) Numéro de publication internationale: WO 2015/189198

(56) Documents cités:
- WO-A1-2005/028106
- GB-A- 2 073 162
- LIU M ET AL: "Facile synthesis and characterization of macro-mesoporous gamma-Al2O3", COLLOIDS AND SURFACES. A, PHYSICACHEMICAL AND ENGINEERING ASPECTS, ELSEVIER, AMSTERDAM, NL, vol. 371, no. 1-3, 20 novembre 2010 (2010-11-20), pages 126-130, XP027435165, ISSN: 0927-7757 [extrait le 2010-09-25]
- GUANG-CI LI ET AL: "Meso/macroporous -AlOfabricated by thermal decomposition of nanorods ammonium aluminium carbonate hydroxide", MATERIALS RESEARCH BULLETIN, ELSEVIER, KIDLINGTON, GB, vol. 47, no. 4, 21 décembre 2011 (2011-12-21), pages 1073-1079, XP028403650, ISSN: 0025-5408, DOI: 10.1016/J.MATERRESBULL.2011.12.026 [extrait le 2012-01-13]

## Description

### Domaine technique

La présente invention se rapporte à la préparation d'une alumine mésoporeuse et macroporeuse amorphe mise en forme à partir d'un gel d'alumine spécifique, ledit gel d'alumine étant obtenu par un procédé comprenant une étape de mise en solution d'un précurseur acide d'alumine, une étape d'ajustement du pH de la suspension par ajout d'un précurseur basique, une étape de co-précipitation d'un précurseur acide et d'un précurseur basique, au moins l'un des deux contenant de l'alumine.

En particulier, la présente invention se rapporte à une alumine mésoporeuse et macroporeuse amorphe présentant une distribution poreuse spécifique, notamment une augmentation du volume mésoporeux, associée à une taille de pores moyenne supérieure ou égale à 18 nm et un volume macroporeux augmenté.

L'alumine selon l'invention, du fait de ses propriétés intéressantes notamment en terme de distribution poreuse, peut être utilisée comme support de catalyseurs dans tous procédés de raffinage ainsi que comme adsorbant.

### Art antérieur

De nombreux brevets décrivent la préparation d'alumines. Des procédés de préparation de gels d'alumine par coprécipitation sont connus de l'art antérieur. Ainsi le brevet US 6 589 908 décrit par exemple un procédé de préparation d'une alumine caractérisée par une absence de macropores, moins de 5 % du volume poreux total constitué par les pores de diamètre supérieur à 35 nm, un haut volume poreux supérieur à 0,8 ml/g, et une distribution de pores bimodale dans laquelle les deux modes sont séparés par 1 à 20 nm et le mode poreux primaire étant plus grand que le diamètre moyen poreux.

A cet effet, le mode décrit met en oeuvre deux étapes de précipitation de précurseurs d'alumine dans des conditions de température, pH et débits bien contrôlées. La première étape opère à une température comprise entre 25 et 60°C, un pH compris entre 3 et 10. La suspension est ensuite chauffée jusqu'à une température comprise entre 50 et 90°C. Des réactifs sont de nouveau ajoutés à la suspension, qui est ensuite lavée, séchée, mise en forme et calcinée pour former un support de catalyseur.

La demande de brevet WO 2004/052534 A1 décrit par ailleurs deux catalyseurs en mélange avec des supports ayant des caractéristiques poreuses différentes, le premier catalyseur ayant plus de la moitié du volume poreux dans les pores de diamètre supérieur à 20 nm, 10 à 30 % du volume poreux étant contenu dans les pores de diamètre supérieur à 200 nm, le volume poreux total étant supérieur à 0,55 ml/g, le deuxième ayant plus de 75 % du volume poreux contenu dans les pores de diamètre compris entre 10 et 120 nm, et moins de 2 % dans les pores de diamètre supérieur à 400 nm.

Le procédé de préparation décrit pour la préparation de ces catalyseurs met en oeuvre une étape de coprécipitation de sulfate d'aluminium avec de l'aluminate de sodium, le gel obtenu est ensuite séché, extrudé et calciné. Il est possible d'ajouter de la silice durant ou après la coprécipitation.

Dans un réacteur, en présence d'eau à une température de 60-75°C, une base (NaAlOO, Hydroxyde d'aluminium ou NaOH) et un acide (AlSO₄ ou AlNO₃) sont ajoutés sous agitation à un pH compris entre 7 et 9,9. Le mélange est laissé à mûrir pendant une durée comprise entre 30 min et 1h30. Le mélange est ensuite soumis à des étapes de malaxage, extrusion, séchage (200°C) sous air, traitement thermique. L'ajustement de la mise en forme permet d'obtenir les caractéristiques du support.

Cependant les modes de préparation décrits dans l'art antérieur ne permettent pas d'obtenir une distribution poreuse bimodale, macroporeuse et mésoporeuse, ciblée sur des mésopores de taille importante. Par ailleurs, l'augmentation de la porosité se fait souvent au détriment de la surface spécifique, et de la résistance mécanique.

De manière surprenante, la demanderesse a découvert qu'un procédé de préparation d'un gel d'alumine spécifique mettant en oeuvre une étape de mise en solution d'un précurseur acide d'aluminium, une étape d'ajustement du pH au moyen d'un précurseur basique et une étape de co-précipitation d'au moins un précurseur acide et au moins un précurseur basique, au moins un des deux précurseurs comprenant de l'aluminium, conduisait à une alumine mésoporeuse et macroporeuse, avec un volume poreux total important, un diamètre médian mésoporeux élevé, une forte proportion de macropores de haut diamètre, et une surface spécifique et une résistance mécanique maintenues en dépit de l'augmentation de la porosité.

### Objets de l'invention

La présente invention a pour objet une alumine à distribution poreuse bimodale : mésoporeuse et macroporeuse présentant un volume mésoporeux élevé et un volume poreux total élevé, conjointement avec un diamètre médian mésoporeux compris entre 20 et 23 nm et un diamètre médian macroporeux compris entre 100 et 1200 nm, bornes incluses.

La présente invention a également pour objet un procédé de préparation de ladite alumine, ledit procédé comprenant au moins les étapes suivantes :
a) Mise en solution d'un précurseur acide d'aluminium;
b) Ajustement du pH au moyen d'un précurseur basique ;
c) Co-précipitation d'un précurseur acide et d'un précurseur basique, au moins un des deux contenant de l'aluminium ;
d) Filtration ;
e) Séchage ;
f) Mise en forme ;
g) Traitement thermique.

### Description de l'invention

### Résumé de l'invention

L'invention concerne un procédé de préparation d'une alumine mésoporeuse et macroporeuse amorphe, ledit procédé comprenant au moins les étapes suivantes :
a) Une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes ;
b) Une étape d'ajustement du pH par ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes ;
c) Une étape de co-précipitation de la suspension obtenue à l'issue de l'étape b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L ;
d) une étape de filtration de la suspension obtenue à l'issue de l'étape c) de co-précipitation pour obtenir un gel d'alumine ;
e) une étape de séchage dudit gel d'alumine obtenu à l'étape d) pour obtenir une poudre,
f) une étape de mise en forme de la poudre obtenue à l'issue de l'étape e) pour obtenir un matériau cru,
g) une étape de traitement thermique du matériau cru obtenu à l'issue de l'étape f) à une température comprise entre 500 et 1000°C, en présence ou non d'un flux d'air contenant jusqu'à 60% en volume d'eau.

La concentration en alumine de la suspension de gel d'alumine obtenue à l'étape c) est avantageusement comprise entre 13 et 35 g/l, de préférence entre 15 et 33 g/l.

De préférence, le précurseur acide est le sulfate d'aluminium.

De préférence, le précurseur basique est l'aluminate de sodium.

De préférence, dans les étapes a), b), c), le milieu réactionnel aqueux est de l'eau et lesdites étapes opèrent sous agitation, en l'absence d'additif organique.

De préférence, le précurseur acide de l'étape a) est introduit en quantité correspondant à 0,5 à 4 % poids de l'alumine totale formée à l'issue de l'étape c).

L'invention concerne également une alumine mésoporeuse et macroporeuse amorphe de structure poreuse bimodale présentant :
- une surface spécifique S_{BET} comprise entre 120 et 160 m²/g,
- un diamètre médian mésoporeux en volume déterminé par intrusion au porosimètre à mercure compris entre 20 et 23 nm,
- un diamètre médian macroporeux en volume déterminé par intrusion au porosimètre à mercure compris entre 100 et 1200 nm, bornes incluses ;
- un volume mésoporeux tel que mesuré par intrusion au porosimètre à mercure, supérieur ou égal à 0,75 ml/g,
- un volume macroporeux tel que mesuré par intrusion au porosimètre à mercure, compris entre 20 et 30% du volume poreux total,
- et un volume poreux total tel que mesuré par porosimétrie au mercure supérieur ou égal à 0,8 ml/g.

Avantageusement, l'alumine mésoporeuse et macroporeuse amorphe ne présente pas de micropores.

### Description détaillée de l'invention

### Terminologie et techniques de caractérisation

Dans toute la suite du texte, la dispersibilité est définie comme le poids de solide ou gel d'alumine peptisée que l'on ne peut pas disperser par centrifugation dans un tube en polypropylene à 3600G pendant 3 min.

L'alumine de la présente invention présente en outre une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume poreux total de l'alumine, le volume mesuré par intrusion au porosimètre à mercure selon la norme ASTM D4284-83 à une pression maximale de 4000 bar, utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume poreux total en ml/g donnée dans le texte qui suit correspond à la valeur du volume mercure total (volume poreux total mesuré par intrusion au porosimètre à mercure) en ml/g mesurée sur l'échantillon moins la valeur du volume mercure en ml/g mesurée sur le même échantillon pour une pression correspondant à 30 psi (environ 0,2 MPa).

Le volume des macropores et des mésopores est mesuré par porosimétrie par intrusion de mercure selon la norme ASTM D4284-83 à une pression maximale de 4000 bar, utilisant une tension de surface de 484 dyne/cm et un angle de contact de 140°.

On fixe à 0,2 MPa la valeur à partir de laquelle le mercure remplit tous les vides intergranulaires, et on considère qu'au delà le mercure pénètre dans les pores de l'alumine.

Le volume macroporeux de l'alumine est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux de l'alumine déterminé par intrusion au porosimètre à mercure est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian mésoporeux (D_{pméso} en nm) comme étant un diamètre tel que tous les pores de taille inférieure à ce diamètre constituent 50% du volume mésoporeux total, mesuré par porosimétrie au mercure.

On définit également le diamètre médian macroporeux (D_{pmacro} en nm) comme étant un diamètre tel que tous les pores de taille inférieure à ce diamètre constituent 50% du volume macroporeux total déterminé par intrusion au porosimètre à mercure.

La distribution poreuse mesurée par adsorption d'azote est déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda.

### Procédé de préparation de l'alumine selon l'invention

L'alumine selon l'invention est obtenue par filtration, séchage, mise en forme et calcination d'un gel d'alumine spécifique. La préparation dudit gel d'alumine comprend trois étapes successives : a) étape de mise en solution d'un précurseur acide d'alumine, b) étape d'ajustement du pH de la suspension au moyen d'un précurseur basique, et c) étape de coprécipitation d'au moins un précurseur acide et d'au moins un précurseur basique, l'un des deux au moins contenant de l'aluminium. A la fin de la synthèse proprement dite du gel d'alumine, c'est à dire à la fin de l'étape c), la concentration en alumine finale dans la suspension doit être comprise entre 10 et 38 g/L, préférentiellement entre 13 et 35 g/L et plus préférentiellement entre 15 et 33 g/L.

### a) Étape de mise en solution

L'étape a) est une étape de mise en solution d'un précurseur acide d'aluminium dans l'eau, réalisée à une température comprise entre 20 et 80°C, de manière préférée entre 20 et 75 °C et de manière plus préférée entre 30 et 70°C. Le précurseur acide d'aluminium est choisi parmi le sulfate d'aluminium, le chlorure d'aluminium et le nitrate d'aluminium, de préférence le sulfate d'aluminium. Le pH de la suspension obtenue est compris entre 0,5 et 5, de préférence entre 1 et 4, de manière préférée entre 1,5 et 3,5. Cette étape contribue avantageusement à une quantité d'alumine introduite par rapport à l'alumine finale comprise entre 0,5 et 4%, de préférence entre 1 et 3%, de manière très préférée entre 1,5 et 2,5% poids. La suspension est laissée sous agitation pendant une durée comprise entre 2 et 60 minutes, et de préférence de 5 à 30 minutes.

### b) Étape d'ajustement du pH

L'étape d'ajustement du pH b) consiste en l'ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium.

De manière préférée, le précurseur basique est un précurseur d'alumine choisi parmi l'aluminate de sodium et l'aluminate de potassium. De manière très préférée, le précurseur basique est l'aluminate de sodium.

L'étape b) est réalisée à une température comprise entre 20 et 90°C, de manière préférée comprise entre 20 et 80 °C et de manière plus préférée entre 30 et 70°C et à un pH compris entre 7 et 10, de préférence entre 8 et 10, de manière préférée entre 8,5 et 10 et de manière très préférée entre 8,7 et 9,9. La durée de l'étape b) d'ajustement du pH est comprise entre 5 et 30 minutes, de préférence entre 8 et 25 minutes, et de manière très préférée entre 10 et 20 minutes.

### c) Étape de co-précipitation (2^{e} précipitation)

L'étape c) est une étape de précipitation par mise en contact, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, lesdits précurseurs étant choisis identiques ou non aux précurseurs introduits aux étapes a) et b). Le débit relatif des précurseurs acide et basique est choisi de manière à obtenir un pH du milieu réactionnel compris entre 7 et 10 et le débit du ou des précurseurs acide et basique contenant de l'aluminium est réglé de manière à obtenir une concentration en alumine finale dans la suspension comprise entre 10 et 38 g/L, préférentiellement entre 13 et 35 g/L et plus préférentiellement entre 15 et 33 g/L.

De manière préférée, l'étape de co-précipitation est conduite à une température comprise entre 20 et 90 °C, et de manière plus préférée entre 30 et 70°C.
L'étape c) de précipitation est réalisée à un pH compris entre 7 et 10, de préférence entre 8 et 10, de manière préférée entre 8,5 et 10 et de manière très préférée entre 8,7 et 9,9.

L'étape c) de co-précipitation est réalisée pendant une durée comprise entre 1 et 60 minutes, et de manière préférée de 5 à 45 minutes.

De préférence, lesdites étapes a), b), et c) sont réalisées en l'absence d'additif organique.

De préférence la synthèse du gel d'alumine (étapes a), b) et c)) est opérée sous agitation.

Dans les étapes a), b) et c), les débits des précurseurs basique et acide, qu'ils contiennent de l'aluminium ou pas, sont déterminés en fonction du pH à atteindre dans chaque étape. Les ratio massiques base/acide sont notamment établis par une courbe de neutralisation de la base par l'acide. Une telle courbe est obtenue aisément par l'homme du métier.

### d) Étape de filtration

De préférence, le procédé de préparation de l'alumine selon l'invention comprend également une étape de filtration de la suspension obtenue à l'issue de l'étape c).

Ladite étape de filtration est réalisée selon les méthodes connues de l'homme du métier.

Ladite étape de filtration est avantageusement suivie d'au moins une étape de lavage, avec une solution aqueuse, de préférence à l'eau et de préférence d'une à trois étapes de lavage, avec une quantité d'eau égale à la quantité de précipité filtré.

### e) Étape de séchage

Conformément à l'invention, le gel d'alumine obtenu à l'issue de l'étape c) de précipitation, suivie d'une étape de filtration d), est séché dans une étape e) de séchage pour obtenir une poudre, ladite étape de séchage étant mise en oeuvre avantageusement par séchage à une température supérieure ou égale à 120°C ou par atomisation ou par toute autre technique de séchage connue de l'homme du métier.

Dans le cas où ladite étape e) de séchage est mise en oeuvre par séchage à une température supérieure ou égale à 120°C, ladite étape d) de séchage peut avantageusement être réalisée en étuve fermée et ventilée. De préférence ladite étape de séchage opère à une température comprise entre 120 et 300°C, de manière très préférée à une température comprise entre 150 et 250°C.

Dans le cas où ladite étape e) de séchage est mise en oeuvre par atomisation, le gâteau obtenu à l'issue de l'étape de deuxième précipitation, suivie d'une étape de filtration, est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre.

De préférence, dans le cas où ladite étape e) de séchage est mise en oeuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### f) Étape de mise en forme

Conformément à l'invention, la poudre obtenue à l'issue de l'étape e) de séchage est mise en forme dans une étape f) pour obtenir un matériau cru.

On entend par matériau cru, le matériau mis en forme et n'ayant pas subi d'étapes de traitement thermique.

De préférence, ladite étape f) de mise en forme est réalisée par malaxage-extrusion, par granulation, par la technique de l'oil drop (égouttage ou coagulation de goutte en français), par pastillage.

De manière très préférée, ladite étape f) de mise en forme est réalisée par malaxage - extrusion.

La mise en forme est avantageusement réalisée avec un taux d'acide (total, exprimé par rapport à l'alumine sèche) compris entre 0 et 4% et préférentiellement entre 0,5 et 1,5%, un taux de neutralisation compris entre 0 et 200% et préférentiellement entre 0 et 40%. Les pertes au feu acide et basique sont avantageusement comprises entre 60 et 70%.

### g) Étape de traitement thermique

Conformément à l'invention, le matériau cru obtenu à l'issue de l'étape f) de mise en forme subit ensuite une étape g) de traitement thermique à une température comprise entre 500 et 1000°C, pendant une durée avantageusement comprise entre 2 et 10 h, en présence ou non d'un flux d'air contenant jusqu'à 60% volume d'eau.

De préférence, ledit traitement thermique est effectué en présence d'un flux d'air contenant de l'eau.

De préférence, ladite étape g) de traitement thermique opère à une température comprise entre 540°C et 850°C.

De préférence, ladite étape g) de traitement thermique opère pendant une durée comprise entre 2h et 10h.

Ladite étape g) de traitement thermique permet la transition de la boehmite vers l'alumine finale.

L'étape de traitement thermique peut être précédée d'un séchage à une température comprise entre 50°C et 120°C, selon toute technique connue de l'homme du métier.

### Caractéristiques de l'alumine mésoporeuse et macroporeuse amorphe obtenue

La distribution poreuse de l'alumine obtenue est caractérisée par intrusion au porosimètre à mercure selon la norme ASTM D4284-83 à une pression maximale de 4000 bar, utilisant une tension de surface de 484 dyne/cm et un angle de contact de 140°.

L'absence de microporosité est vérifiée par porosimétrie azote.

Le procédé de préparation selon l'invention permet l'obtention d'une alumine mésoporeuse et macroporeuse amorphe présentant un diamètre médian mésoporeux élevé, déterminé sur la courbe de distribution poreuse en volume par intrusion au porosimètre à mercure.

L'alumine selon la présente invention présente un volume poreux total (VPT) tel que mesuré par intrusion au porosimètre à mercure, d'au moins 0,80 ml/g et de préférence d'au moins 0,90 ml/g, de manière très préférée d'au moins 0,95 ml/g.

L'alumine selon l'invention présente un volume macroporeux, V₅₀ₙₘ, défini comme le volume des pores de diamètre supérieur à 50 nm, tel que mesuré par intrusion au porosimètre à mercure, compris entre 20 et 30 % du volume poreux total.

L'alumine selon la présente invention présente un volume mésoporeux, c'est-à-dire contenu dans les pores de diamètre compris entre 2 et 50 nm, bornes incluses, tel que mesuré par intrusion au porosimètre à mercure, d'au moins 0,75 ml/g.

Le diamètre médian mésoporeux (ici appelé D_{p méso}) est compris entre 20 et 23 nm, bornes incluses.

Le diamètre médian macroporeux (ici appelé D_{p macro}) est compris entre 100 nm et 1200 nm, de manière préférée entre 110 nm et 1000 nm, de manière très préférée entre 250 et 500 nm, bornes incluses.

L'alumine selon la présente invention présente une surface spécifique BET (SS) comprise entre 120 et 160 m²/g.

Le mode de préparation selon la présente invention présente notamment l'avantage de conduire à une alumine ayant une résistance mécanique tout à fait satisfaisante par rapport aux volumes poreux qui la caractérisent, ladite résistance étant matérialisée par la valeur de l'écrasement grain à grain EGG, de préférence d'au moins 0,5 daN/mm, de manière très préférée d'au moins 0,8 daN/mm.

De manière très préférée, les caractéristiques texturales d'une alumine mésoporeuse et macroporeuse obtenue à partir d'un gel préparé selon le mode particulier décrit ci-dessus sont les suivantes :
- Un volume mésoporeux total tel que déterminé par intrusion au porosimètre à mercure compris entre 0,75 et 0,85 ml/g, bornes incluses ;
- Un volume macroporeux total tel que déterminé par intrusion au porosimètre à mercure compris entre 0,15 et 0,25 ml/g, bornes incluses ;
- Un diamètre médian mésoporeux en volume tel que déterminé par intrusion au porosimètre à mercure compris entre 20 et 23 nm, bornes incluses ;
- Un diamètre médian macroporeux en volume tel que déterminé par intrusion au porosimètre à mercure compris entre 100 et 1200 nm, bornes incluses ;
- Un volume poreux total compris entre 0,90 et 1,05 ml/g, bornes incluses ;
- Un volume macroporeux tel que mesuré par intrusion au porosimètre à mercure compris entre 20 et 30% du volume poreux total ;
- Une surface spécifique S_{BET} comprise entre 120 et 160 m²/g, bornes incluses ;
- Une répartition poreuse exprimée en pourcentage du volume poreux total (VPT) comme suit :
   ∘ 0 à 10 % du VPT est occupé par les pores de diamètre strictement inférieur à 10 nm ;
   ∘ 0 à 35 % du VPT est occupé par les pores de diamètre compris entre 10 et 20 nm, borne supérieure exclue ;
   ∘ 10 à 70 % du VPT est occupé par les pores de diamètre compris entre 20 et 50 nm, borne supérieure exclue ;
   ∘ 10 à 90 % du VPT est occupé par les pores de diamètre supérieur ou égal à 50 nm.

L'invention est illustrée par les exemples suivants qui ne présentent, en aucun cas, un caractère limitatif.

### EXEMPLES

### Exemple 1 (conforme à l'invention) : Préparation d'une alumine A1 conforme à l'invention

Les solutions aqueuses précurseurs d'aluminate de sodium et de sulfate d'aluminium sont préparées à partir de solution mère.

Un réacteur de laboratoire d'une capacité d'environ 7000 ml est utilisé.

La synthèse se déroule à 70°C et sous agitation. On a un pied d'eau de 1679 ml.

### Alumine A1

On prépare 5 l de solution à une concentration fixée à 27g/l en alumine dans la suspension finale et avec un taux de contribution de la première étape à 2,1% poids de l'alumine totale.

### Étape a) de mise en solution :

On introduit 70 ml de sulfate d'aluminium dans le réacteur contenant le pied d'eau en une fois. L'évolution du pH, qui reste compris entre 2,5 et 3, est suivie pendant 10 min. Cette étape contribue à l'introduction de 2,1 % d'alumine en poids par rapport à la masse totale d'alumine formée à l'issue de la synthèse du gel.

### Étape b) d'ajustement du pH :

Après l'étape de mise en solution du sulfate d'aluminium, on ajoute progressivement environ 70 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :
1020 ml de sulfate d'aluminium, soit un débit de 34 ml/min,
1020 ml d'aluminate de sodium, soit un débit de 34 ml/min,
1150 ml d'eau distillée, soit un débit de 38,3 ml/min.

Le pH de co-précipitation est maintenu entre 7 et 10 en contrôlant en priorité le débit de la pompe d'aluminate de sodium.

A la fin de la synthèse, la suspension est filtrée et lavée plusieurs fois.

Le gâteau est sur-séché à l'étuve pendant au minimum une nuit à 200°C. On obtient la poudre que l'on doit mettre en forme.

Les caractéristiques principales du gel obtenu et engagé dans la mise en forme sont rappelées dans le Tableau 1.

**Tableau 1 : Caractéristiques du gel utilisé pour la préparation de l'alumine.**

| Phase détectée en DRX | Perte au feu (%m/m) | Teneur en S (ppm) | Teneur en Na (ppm) |
|---|---|---|---|
| Boehmite | 20,7 | 350 | 60 |

La mise en forme est réalisée sur malaxeur de type Brabender avec un taux d'acide (total, exprimé par rapport à l'alumine sèche) de 1%, un taux de neutralisation de 20% et des pertes au feu acide et basique respectivement de 62 et 64%.

L'extrusion est effectuée sur une extrudeuse à piston (vitesse d'extrusion 50cm/min et filière trilobée de diamètre 2,1mm).

Après extrusion, les joncs sont séchés une nuit à 80°C et calcinés 2h à 800°C sous flux d'air humide en four tubulaire (VVH=1 l/h/g avec 30% d'eau).

### Exemple 2 (conforme à l'invention):

Deux alumines A2 et A3 sont préparées de manière identique à celle préparée à l'exemple 1, mais à partir de deux suspensions de gels d'alumine de concentration respectivement égale à 15g/l de concentration en alumine finale et égale à 30g/l de concentration en alumine finale.

Seule la concentration en alumine finale du gel varie.

### Alumine A2

On prépare 5l de solution à une concentration fixée à 15 g/L en alumine finale et avec un taux de contribution de la première étape à 2,1% en poids de l'alumine totale.

### Étape a) de mise en solution :

On introduit 39 ml de sulfate d'aluminium dans le réacteur contenant le pied d'eau en une fois. L'évolution du pH, qui reste compris entre 2,5 et 3, est suivie pendant 10 min. Cette étape contribue à l'introduction de 2,1 % d'alumine poids par rapport à la masse totale d'alumine formée à l'issue de la synthèse du gel.

### Étape b) d'ajustement du pH :

Après l'étape de mise en solution du sulfate d'aluminium, on ajoute progressivement environ 40 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :
567 ml de sulfate d'aluminium, soit un débit de 20 ml/min,
567 ml d'aluminate de sodium, soit un débit de 19 ml/min,
639 ml d'eau distillée, soit un débit de 22 ml/min.

### Alumine A3

On prépare 5L de solution à une concentration fixée à 30 g/L en alumine finale et avec un taux de contribution de la première étape à 2,1% en poids de l'alumine totale.

### Étape a) de mise en solution :

On introduit 77 ml de sulfate d'aluminium dans le réacteur contenant le pied d'eau en une fois. L'évolution du pH, qui reste compris entre 2,5 et 3, est suivie pendant 10 min. Cette étape contribue à l'introduction de 2,1 % d'alumine par rapport à la masse totale d'alumine formée à l'issue de la synthèse du gel.

### Étape b) d'ajustement du pH :

Après l'étape de mise en solution du sulfate d'aluminium, on ajoute progressivement environ 78 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :
1135 ml de sulfate d'aluminium, soit un débit de 38 ml/min,
1135 ml d'aluminate de sodium, soit un débit de 39 ml/min,
180 ml d'eau distillée, soit un débit de 43 ml/min.

Les caractéristiques poreuses des alumines A1, A2 et A3 obtenues en fonction de la concentration en alumine de la suspension de gel obtenue à l'issue de l'étape c) sont reportées dans le tableau 2.

**Tableau 2 : Caractéristiques poreuses des alumines A1, A2 et A3 obtenues en fonction de la concentration en alumine dans la suspension de gel finale**

| **Alumine** | **[Al₂O₃]finale du gel** | **Vméso (ml/g)** | **V_{macro} (ml/g)** | **Dp méso (nm)** | **Dp macro (nm)** | **VPT (ml)** | **S_{BET} (m²/g)** |
|---|---|---|---|---|---|---|---|
| **A2** | 15g/L | 0,77 | 0,26 | 22,7 | 250 | 1,03 | 119 |
| **A1** | 27g/L | 0,83 | 0,21 | 20,8 | 250 | 1,04 | 130 |
| **A3** | 30g/L | 0,78 | 0,24 | 20,2 | 302 | 1,02 | 124 |

### Exemple 3 (comparatif) : Préparation de trois alumines C1, C2 et C3 non conformes

Trois alumines C1, C2 et C3 sont préparées de manière identique à celle préparée à l'exemple 1, mais à partir de trois suspensions de gels d'alumine de concentration respectivement égales à 40 g/l de concentration en alumine finale, 60g/l de concentration en alumine finale et 8g/l de concentration en alumine finale.

Seule la concentration en alumine finale du gel varie.

### Alumine C1

On prépare 5 l de solution à une concentration fixée à 40 g/l en alumine finale et avec un taux de contribution de la première étape à 2,1% en poids de l'alumine totale.

### Étape a) de mise en solution :

On introduit 103 ml de sulfate d'aluminium dans le réacteur contenant le pied d'eau en une fois. L'évolution du pH, qui reste compris entre 2,5 et 3, est suivie pendant 10 min. Cette étape contribue à l'introduction de 2,1 % poids d'alumine par rapport à la masse totale d'alumine formée à l'issue de la synthèse du gel.

### Étape b) d'ajustement du pH :

Après l'étape de mise en solution du sulfate d'aluminium, on ajoute progressivement environ 103 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :
1515 ml de sulfate d'aluminium, soit un débit de 51 ml/min,
1515 ml d'aluminate de sodium, soit un débit de 51ml/min,
1710ml d'eau distillée, soit un débit de 58 ml/min.

### Alumine C2

On prépare 5L de solution à une concentration fixée à 60 g/L en alumine finale et avec un taux de contribution de la première étape à 2,1% poids de l'alumine totale.

### Étape a) de mise en solution :

On introduit 156 mL de sulfate d'aluminium dans le réacteur contenant le pied d'eau en une fois. L'évolution du pH, qui reste compris entre 2,5 et 3, est suivie pendant 10 min. Cette étape contribue à l'introduction de 2,1 % d'alumine en poids par rapport à la masse totale d'alumine formée à l'issue de la synthèse du gel.

### Étape b) d'ajustement du pH :

Après l'étape de mise en solution du sulfate d'aluminium, on ajoute progressivement environ 156 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :
2270 mL de sulfate d'aluminium, soit un débit de 76 ml/min,
2270 mL d'aluminate de sodium, soit un débit de 76 ml/min,
2600 mL d'eau distillée, soit un débit de 85.5 ml/min.

### Alumine C3

On prépare 5 l de solution à une concentration fixée à 8 g/l en alumine finale et avec un taux de contribution de la première étape à 2,1% en poids de l'alumine totale.

### Étape a) de mise en solution :

On introduit 21 ml de sulfate d'aluminium dans le réacteur contenant le pied d'eau en une fois. L'évolution du pH, qui reste compris entre 2,5 et 3, est suivie pendant 10 min. Cette étape contribue à l'introduction de 2,1 % en poids d'alumine par rapport à la masse totale d'alumine formée à l'issue de la synthèse du gel.

### Étape b) d'ajustement du pH :

Après l'étape de mise en solution du sulfate d'aluminium, on ajoute progressivement environ 21 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :
302 ml de sulfate d'aluminium, soit un débit de 10 ml/min,
302 ml d'aluminate de sodium, soit un débit de 10 ml/min,
341ml d'eau distillée, soit un débit de 11,3 ml/min.

**Tableau 3 : Caractéristiques poreuses des alumines A1 (selon l'invention), C1, C2 et C3 (non-conformes) obtenues en fonction de la concentration en alumine dans la suspension de gel finale**

| | **[Al2O3]finale du gel** | **Vméso (ml/g)** | **V_{macro} (ml/g)** | **Dp_{méso} (nm)** | **Dp _{macro} (nm)** | **VPT (ml/g)** | **S_{BET} (m²/g)** |
|---|---|---|---|---|---|---|---|
| **A1 (selon l'invention)** | 27g/L | 0,83 | 0,21 | 20,8 | 250 | 1,04 | 130 |
| **C2 (comparatif)** | 60g/L | 0,58 | 0,22 | 15,3 | 350 | 0,80 | 135 |
| **C1 (comparatif)** | 40g/L | 0,70 | 0,11 | 16,5 | 750 | 0,86 | 137 |
| **C3 (comparatif)** | 8 g/l | 0.80 | 0,00 | 19,2 | - | 0,80 | 160 |

Lorsque la concentration en alumine finale de la suspension de gel d'alumine obtenue à l'issue de l'étape c) est supérieure à 38 g/l (alumines C1 et C2), on observe que les caractéristiques poreuses recherchées ne sont pas obtenues, avec notamment un diamètre médian mésoporeux inférieur à 18 nm. Par ailleurs le volume mésoporeux plafonne à 0,70 ml/g.

Lorsque la concentration en alumine finale de la suspension de gel d'alumine obtenue à l'étape c) est inférieure à 10% (alumine C3), aucune macroporosité notable n'est obtenue (V macro =0,0 ml/g), l'alumine obtenue est uniquement mésoporeuse.

## Revendications

1. Procédé de préparation d'une alumine mésoporeuse et macroporeuse amorphe, ledit procédé comprenant au moins les étapes suivantes :
a) Une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes ;
b) Une étape d'ajustement du pH par ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes ;
c) Une étape de co-précipitation de la suspension obtenue à l'issue de l'étape b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L ;
d) une étape de filtration de la suspension obtenue à l'issue de l'étape c) de co-précipitation pour obtenir un gel d'alumine ;
e) une étape de séchage dudit gel d'alumine obtenu à l'étape d) pour obtenir une poudre,
f) une étape de mise en forme de la poudre obtenue à l'issue de l'étape e) pour obtenir un matériau cru,
g) une étape de traitement thermique du matériau cru obtenu à l'issue de l'étape f) à une température comprise entre 500 et 1000°C, en présence ou non d'un flux d'air contenant jusqu'à 60% en volume d'eau.

2. Procédé selon la revendication 1 dans lequel la concentration en alumine de la suspension de gel d'alumine obtenue à l'étape c) est comprise entre 13 et 35 g/l.

3. Procédé selon la revendication 2 dans lequel la concentration en alumine de la suspension de gel d'alumine obtenue à l'étape c) est comprise entre 15 et 33 g/l.

4. Procédé selon l'une des revendications 1 à 3 dans lequel le précurseur acide est le sulfate d'aluminium.

5. Procédé selon l'une des revendications 1 à 4 dans lequel le précurseur basique est l'aluminate de sodium.

6. Procédé selon l'une des revendications 1 à 5 dans lequel dans les étapes a), b), c) le milieu réactionnel aqueux est de l'eau et lesdites étapes opèrent sous agitation, en l'absence d'additif organique.

7. Procédé selon l'une des revendications 1 à 6 dans lequel le précurseur acide de l'étape a) est introduit en quantité correspondant à 0,5 à 4 % de l'alumine totale formée à l'issue de l'étape c).

8. Alumine mésoporeuse et macroporeuse amorphe de structure poreuse bimodale présentant :
- une surface spécifique S_{BET} comprise entre 120 et 160 m²/g,
- un diamètre médian mésoporeux en volume déterminé par intrusion au porosimètre à mercure compris entre 20 et 23 nm,
- un diamètre médian macroporeux en volume déterminé par intrusion au porosimètre à mercure compris entre 100 et 1200 nm, bornes incluses ;
- un volume mésoporeux tel que mesuré par intrusion au porosimètre à mercure, supérieur ou égal à 0,75 ml/g,
- un volume macroporeux tel que mesuré par intrusion au porosimètre à mercure, compris entre 20 et 30% du volume poreux total,
- et un volume poreux total tel que mesuré par porosimétrie au mercure supérieur ou égal à 0,8 ml/g.

9. Alumine mésoporeuse et macroporeuse amorphe selon la revendication 8 ne présentant pas de micropores.

## Patentansprüche

1. Verfahren zur Herstellung eines mesoporösen und makroporösen amorphen Aluminiumoxids, wobei das Verfahren mindestens die folgenden Schritte umfasst:
a) einen Schritt des Lösens eines sauren Vorläufers von Aluminium, ausgewählt aus Aluminiumsulfat, Aluminiumchlorid und Aluminiumnitrat, in Wasser, bei einer Temperatur zwischen 20 und 90°C, bei einem pH zwischen 0,5 und 5, während einer Dauer zwischen 2 und 60 Minuten;
b) einen Schritt des Einstellens des pH durch den Zusatz, zu der in dem Schritt a) erhaltenen Suspension, mindestens eines basischen Vorläufers, ausgewählt aus Natriumaluminat, Kaliumaluminat, Ammoniak, Natriumhydroxid und Kaliumhydroxid, bei einer Temperatur zwischen 20 und 90°C, und bei einem pH zwischen 7 und 10, während einer Dauer zwischen 5 und 30 Minuten;
c) einen Schritt des Co-Fällens der am Ende des Schritts b) erhaltenen Suspension durch den Zusatz, zu der Suspension, mindestens eines basischen Vorläufers, ausgewählt aus Natriumaluminat, Kaliumaluminat, Ammoniak, Natriumhydroxid und Kaliumhydroxid, und mindestens eines sauren Vorläufers, ausgewählt aus Aluminiumsulfat, Aluminiumchlorid, Aluminiumnitrat, Schwefelsäure, Salzsäure und Salpetersäure, wobei mindestens einer der basischen oder sauren Vorläufer Aluminium umfasst, wobei der relative Durchsatz der sauren und basischen Vorläufer derart ausgewählt wird, dass ein pH des Reaktionsmediums zwischen 7 und 10 erhalten wird, und wobei der Durchsatz des oder der sauren und basischen Vorläufer, die Aluminium enthalten, derart geregelt wird, dass eine Endkonzentration von Aluminiumoxid in der Suspension zwischen 10 und 38 g/l erhalten wird;
d) einen Schritt des Filtrierens der Suspension, die am Ende des Schritts c) des Co-Fällens erhalten wird, um ein Aluminiumoxid-Gel zu erhalten;
e) einen Schritt des Trocknens des in dem Schritt d) erhaltenen Aluminiumoxid-Gels, um ein Pulver zu erhalten;
f) einen Schritt des Formens des am Ende des Schritts e) erhaltenen Pulvers, um ein Rohmaterial zu erhalten;
g) einen Schritt einer Wärmebehandlung des am Ende des Schritts f) erhaltenen Rohmaterials bei einer Temperatur zwischen 500 und 1000°C, in An- oder Abwesenheit eines Luftstroms, der bis zu 60 Vol.-% Wasser enthält.

2. Verfahren nach Anspruch 1, wobei die Konzentration von Aluminiumoxid der Suspension des Aluminiumoxid-Gels, das in dem Schritt c) erhalten wird, zwischen 13 und 35 g/l beträgt.

3. Verfahren nach Anspruch 2, wobei die Konzentration von Aluminiumoxid der Suspension des Aluminiumoxid-Gels, das in dem Schritt c) erhalten wird, zwischen 15 und 33 g/l beträgt.

4. Verfahren nach einem der Ansprüche 1 bis 3, wobei der saure Vorläufer Aluminiumsulfat ist.

5. Verfahren nach einem der Ansprüche 1 bis 4, wobei der basische Vorläufer Natriumaluminat ist.

6. Verfahren nach einem der Ansprüche 1 bis 5, wobei in den Schritten a), b), c) das wässrige Reaktionsmedium Wasser ist, und die Schritte unter Rühren, in Abwesenheit eines organischen Additivs, betrieben werden.

7. Verfahren nach einem der Ansprüche 1 bis 6, wobei der saure Vorläufer des Schritts a) in einer Menge eingebracht wird, die 0,5 bis 4 % des gesamten Aluminiumoxids entspricht, das am Ende des Schritts c) gebildet wird.

8. Mesoporöses und makroporöses amorphes Aluminiumoxid mit einer bimodalen porösen Struktur, welches aufweist:
- eine spezifische Oberfläche S_{BET} zwischen 120 und 160 m²/g,
- einen mesoporösen mittleren Volumendurchmesser, bestimmt über Quecksilberporosimetrie, zwischen 20 und 23 nm,
- einen makroporösen mittleren Volumendurchmesser, bestimmt über Quecksilberporosimetrie, zwischen einschließlich 100 und einschließlich 1200 nm,
- ein mesoporöses Volumen, ebenfalls durch Quecksilberporosimetrie gemessen, größer oder gleich 0,75 ml/g,
- ein makroporöses Volumen, ebenfalls durch Quecksilberporosimetrie gemessen, zwischen 20 und 30 % des gesamten porösen Volumens,
- und ein gesamtes poröses Volumen, wie durch Quecksilberporosimetrie gemessen, größer oder gleich 0,8 ml/g.

9. Mesoporöses und makroporöses amorphes Aluminiumoxid nach Anspruch 8, welches keine Mikroporen aufweist.

## Claims

1. A process for the preparation of an amorphous mesoporous and macroporous alumina, said process comprising at least the following steps:
a) a step for dissolving an acidic precursor of aluminium selected from aluminium sulphate, aluminium chloride and aluminium nitrate in water, at a temperature in the range 20°C to 90°C, at a pH in the range 0.5 to 5, for a period in the range 2 to 60 minutes;
b) a step for adjusting the pH by adding, to the suspension obtained in step a), at least one basic precursor selected from sodium aluminate, potassium aluminate, ammonia, sodium hydroxide and potassium hydroxide, at a temperature in the range 20°C to 90°C, and at a pH in the range 7 to 10, for a period in the range 5 to 30 minutes;
c) a step for co-precipitation of the suspension obtained at the end of step b) by adding to the suspension at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid and nitric acid, at least one of the basic or acidic precursors comprising aluminium, the relative flow rate of the acidic and basic precursors being selected so as to obtain a pH in the range 7 to 10 in the reaction medium and the flow rate of the acidic and basic precursor or precursors containing aluminium being adjusted so as to obtain a final concentration of alumina in the suspension in the range 10 to 38 g/L;
d) a step for filtration of the suspension obtained at the end of the co-precipitation step c) in order to obtain an alumina gel;
e) a step for drying said alumina gel obtained in step d) in order to obtain a powder;
f) a step for shaping the powder obtained at the end of step e) in order to obtain a green material;
g) a step for heat treatment of the green material obtained at the end of step f) at a temperature in the range 500°C to 1000°C, in the presence or otherwise of a stream of air containing up to 60% by volume of water.

2. The process according to claim 1, in which the concentration of alumina in the suspension of alumina gel obtained in step c) is in the range 13 to 35 g/L.

3. The process according to claim 2, in which the concentration of alumina in the suspension of alumina gel obtained in step c) is in the range 15 to 33 g/L.

4. The process according to one of claims 1 to 3, in which the acidic precursor is aluminium sulphate.

5. The process according to one of claims 1 to 4, in which the basic precursor is sodium aluminate.

6. The process according to one of claims 1 to 5, in which in the steps a), b), c), the aqueous reaction medium is water and said steps are carried out with stirring, in the absence of an organic additive.

7. The process according to one of claims 1 to 6, in which the acidic precursor of step a) is introduced in a quantity corresponding to 0.5% to 4% of the total weight of the alumina formed at the end of step c).

8. An amorphous mesoporous and macroporous alumina with a bimodal pore structure having:
• a specific surface area S_{BET} in the range 120 to 160 m²/g;
• a median mesopore diameter, by volume determined by mercury intrusion porosimetry, in the range 20 to 23 nm, limits included;
• a median macropore diameter, by volume determined by mercury intrusion porosimetry, in the range 100 to 1200 nm, limits included;
• a mesopore volume, as measured by mercury intrusion porosimetry, of 0.75 mL/g or more;
• in which the macropore volume is in the range 20% to 30% of the total pore volume;
• and a total pore volume, as measured by mercury porosimetry, of 0.8 mL/g or more.

9. The amorphous mesoporous and macroporous alumina according to claim 8, having no micropores.
